# EUROPEAN PATENT APPLICATION

(11) **EP 1 857 211 A1**
(43) Date of publication of application: **21.11.2007**
(21) Application number: 07107593.1
(22) Date of filing: 07.05.2007
(51) Int. Cl.: B23D 61/12, B23D 65/04, B23D 63/14

(54) **A saw blade and a method of making saw blades**

(30) Priority: 16.05.2006 SE 0601091
(71) Applicant: AB Munkforssagar, 684 23 Munkfors (SE)
(72) Inventor: Gavén, Jan-Åke, 683 92 Hagfors (SE)
(74) Representative: Andréasson, Ivar

(57) **Abstract**

The invention relates to a saw blade and a method of making saw blades. According to the invention, the saw blade has teeth where the tips of the teeth have been shaped by grinding. A leading face and a trailing face of the teeth are connected to each other by a connecting surface that forms an angle from 8° to 12°. The cutting teeth have a spacing of 4-20 mm.

## Description

### FIELD OF THE INVENTION

The invention relates to a saw blade, in particular a saw blade suitable for cutting meat and fish. The invention also relates to a use for a saw blade according to the invention and to a method of making saw blades.

### BACKGROUND OF THE INVENTION

The shape of the cutting teeth of a saw blade is important and affects the cutting significantly. When angle of the tooth edge is sharp, this means that the saw is also sharp and that it cuts effectively. However, very sharp teeth will also be weaker and therefore more susceptible to damage. For example, in a band saw blade used to cut an animal carcass, the blade is pressed backwards and the pressure on the teeth may eventually result in overloading such that, for many teeth, the edge will be broken. The saw will then become dull and the cutting operation less efficient. It has been proposed in US patent No. 4232578 that a saw suitable for cutting metal can be manufactured by a method in which a deforming force is applied to the tips of the teeth of a saw blade. The deforming force may be applied by a punch that acts on a precursor blade. Application of a deforming force to the tips is said to produce the result that the teeth of the finished blade have a height that is slightly less than the height of the teeth of the precursor blade. The blade is said to exhibit a substantially longer life due to this method of manufacturing.

It is an object of the present invention to provide a saw blade that has a long life and is able to keep its sharpness during long periods, even when the saw blade is continuously used for cutting. The saw blade should in particular be suitable for cutting meat and fish. It is also an object of the invention to provide a method for making saw blades.

### DISCLOSURE OF THE INVENTION

A saw blade according to the invention has a plurality of cutting teeth that are spaced from each other with a spacing of 4 mm - 20 mm. Each cutting tooth has a leading face and a trailing face. The teeth may be hardened teeth but embodiments of the invention are conceivable where the teeth are not hardened. The teeth have been ground to a shape where the leading face is connected to the trailing face by a connecting surface that is inclined in relation to the leading face and the trailing face. The connecting surface is further sloping downwards from the leading face to the trailing face. Thereby, the connection surface forms an angle of inclination of 8° to 12° with an imaginary straight line that connects the edges of different teeth to each other.

In many suitable embodiments, each cutting tooth has been ground to the same shape. However, embodiments of the invention are conceivable where some teeth have a different shape. For example, some saw blades may have a profile that includes small secondary teeth located between the main teeth of the saw blade. The saw blade may in particular be a bandsaw blade that forms a loop. Preferably, the saw blade is made of carbon steel.

The invention also includes a method of making a saw blade. The method comprises the steps of providing a steel blade and grinding the steel blade to form a plurality of cutting teeth that are spaced from each other with a spacing of 4 mm - 20 mm and grinding the teeth to the desired shape. The teeth are ground to such a shape that each cutting tooth has a leading face and a trailing face. In the grinding operation, at least some of the cutting teeth are ground to a shape where the leading face is connected to the trailing face by a connecting surface. The connecting surface is inclined in relation to the leading face and the trailing face. The connecting surface is ground to a shape such that it slopes downwards from the leading face to the trailing face and thereby forms an angle of inclination of 8° to 12° with an imaginary straight line that connects the edges of different teeth to each other. The precise value for the angle of inclination depends on, inter alia, the spacing between the teeth, the size of the gullet between the teeth. After the teeth have been ground to the desired shape, they may subsequently be hardened.

In some embodiments, each cutting tooth is ground to the same shape.

According to an advantageous embodiment, a suitable angle of inclination for the connecting surface is calculated. The criteria for sawing are that the chips formed by a tooth cutting through the work piece must not fill the gullet to more than 70 % of the space available in the gullet. As a consequence of the size of the gullet, the feed is also a function of the thickness of the work piece to be cut.

### BRIEF DESCRIPTION OF THE DRAWINGS

- Fig. 1: is an illustration of a saw blade during use to cut an animal carcass.
- Fig. 2: is a side view of a saw blade according to the invention.
- Fig. 3: is a view corresponding to Fig. 2 but showing only one tooth.
- Fig. 4: is a schematic representation of the geometry of a saw blade in use.
- Fig. 5: is a schematic representation corresponding to Fig. 4 but in a different scale and where the interaction between a saw blade and a work piece is further illustrated.
- Fig. 6: is a schematic representation of a hypothetically possible design of a saw blade.
- Fig. 7: is a schematic representation of how the saw blade of Fig. 6 engages a work piece.
- Fig. 8: is a schematic representation of how a saw blade according to the present invention engages a work piece.
- Fig. 9: is a schematic representation of one saw blade tooth on a saw blade according to the present invention.
- Fig. 10: is a schematic side view of a step in a process for making the saw blade according to the invention.
- Fig. 11: is a schematic front view corresponding to Fig. 10.

### DETAILED DESCRIPTION OF THE INVENTION

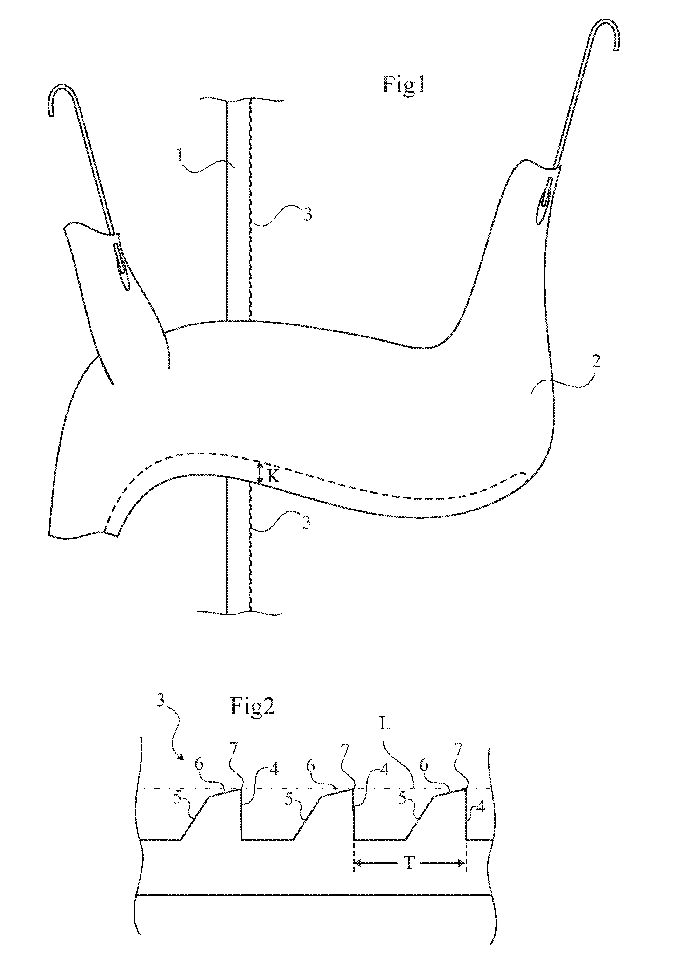

With reference to Fig. 1, the invention relates to a saw blade 1 and in particular to a saw blade suitable for cutting meat and fish. In Fig. 1, it is indicated how a saw blade 1 is used to cut an animal carcass 2. In Fig. 1, the letter K represents the thickness of the work piece where the saw blade cuts into the animal carcass. The saw blade 1 has a plurality of cutting teeth 3. As best seen in Fig. 2, the cutting teeth 3 are spaced from each other with a spacing T. The spacing between the teeth 3 is in the range of 4 mm - 20 mm which is deemed suitable if the saw blade is to be used for cutting meat or fish. For band saws used to cut materials such as wood, the spacing T may be about 35-50 mm but this is not considered suitable when the work pieces are pieces of meat and fish. During cutting of meat and fish, it must be taken into consideration that the possible speed of cutting may vary considerably. This is because the saw must often cut through both (soft) pure meat and hard bone. Sometimes, the work-pieces may be frozen. Under such conditions, a suitable spacing can be 4 - 20 mm.

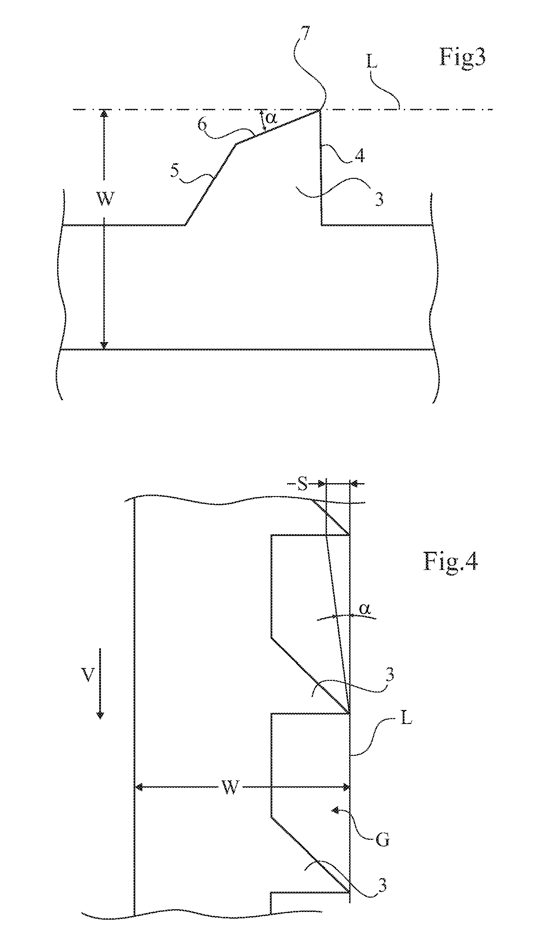

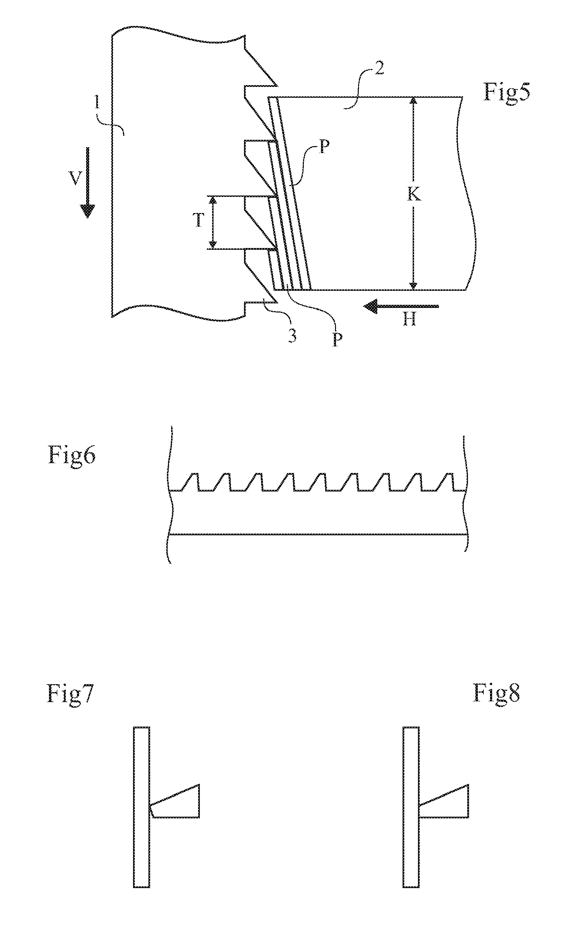

As best seen in Fig. 3, each cutting tooth 3 has a leading face 4 and a trailing face 5. The saw blade is shaped such that it is supposed to work in a specific direction of movement during a sawing operation, see for example Fig. 5 where the velocity of the saw blade is indicated by arrow V. The leading face 4 of the teeth is preferably vertical or substantially vertical (the term "vertical" refers to what is vertical in Fig. 2) while the trailing face 5 is inclined (i.e. it is neither parallel to nor perpendicular to the direction of movement of the saw blade during cutting). The cutting teeth 3 may be hardened teeth 3. Hardened teeth 3 may be an advantage in many cases. However, for certain applications, it may be preferable to use teeth that have not been hardened. For example, if the saw is used to cut frozen fish or frozen meat, the teeth 3 should not be too brittle. In such cases, it may be preferable to have teeth that have not been hardened. The thickness of the saw blade 1 may be about 1 mm in many realistic embodiments of the invention. In most cases, the height of the teeth 3 may be up to 6.5 mm or 7mm. The saw blade itself may have a width of up to 50 mm. The width W of the saw blade can normally be expected to be in the range of 8 mm - 50 mm if it is a saw blade used for cutting meat. For certain special applications, saw blades having a width of less than 8 mm are known. It should be understood that the shape of the leading face 4 and the trailing face 5 as shown in Fig. 2 and Fig. 3 is not necessarily defined by straight lines as shown in Fig. 2 and Fig. 3 but that these faces could also be somewhat curved.

The material used in the saw blade is preferably carbon steel. Compared to stainless steel, carbon steel is less expensive since many of the alloys used in stainless steel are expensive. Moreover, if the teeth 3 are to be hardened, carbon steel is a natural choice since carbon steel can be easily hardened. There is also a further reason why carbon steel may be the preferred choice of material. A saw blade used for cutting meat or fish is often formed as an endless band, i.e. e loop. To form the blade into an endless band, two ends of a blade are welded together. This is normally done by butt-welding. Butt-welding is a method that is easily performed on carbon steel but difficult to perform on stainless steel. As used herein, the term carbon steel should be understood as referring to steel materials with a low content of substances such as nickel and chromium. Normally, a steel is considered to be a carbon steel if the content of alloys, expressed as percent by weight, is limited as follows: max 0.4 % Si, max 0.6 % Mn, max 0.1 % Ni, max 0.1 % Cr, max 0.05 % P and 0.05 % S. The carbon content of carbon steel may be up to 2% by weight.

Although carbon steel is a preferred choice of material, embodiments of the invention are conceivable where other materials are used, e.g. stainless steel.

Reference will now be made to Fig. 2 and Fig. 3. According to the invention, the teeth 3 have been ground to a shape where the leading face 4 is connected to the trailing face 5 by a connecting surface 6 that is inclined in relation to the leading face 4 and the trailing face 5. The connecting surface 6 is further sloping downwards from the leading face 4 to the trailing face 5 and it thereby forms an angle of inclination of 8° to 12° with an imaginary straight line L that connects the edges or tips 7 of different teeth 3 to each other.

In most embodiments, each cutting tooth 3 has been ground to the same shape and size but embodiments of the invention may be envisaged where some teeth have different shape or size. The saw blade 1 is a bandsaw blade which is a suitable choice if the saw blade is to be used for cutting large pieces of meat or animal carcasses.

The shape of the cutting teeth 3 has been carefully chosen to achieve a long life for the cutting teeth 3 such that the saw blade 1 can be used for a long period without change or regrinding. The chosen profile of the saw blade 1 shall now be explained with reference to Figs. 4 - 9. As indicated in Fig. 5, a saw blade 1 cuts through a work piece (for example an animal carcass). The teeth 3 of the saw blade 1 will each take their own part of the work piece. As indicated in Fig. 4, each tooth 3 cuts into the work piece with a distance S that corresponds to the feed of the work piece during the time the tooth travels the distance corresponding to the spacing T between adjacent teeth 3. The distance S will then be the cutting depth S for that tooth. How deeply each tooth 3 cuts into the work piece depends on such factors as the spacing T between the teeth, the speed H with which the work piece is fed against the saw and the speed V of the saw blade. Generally speaking, a smaller spacing T results in a smaller cutting depth S. During cutting of objects such as frozen tuna fish or animal carcasses (e.g. sheep or swine), typical values for the cutting depth S may be, for example, 0,01 mm - 0,1 mm. Theoretically, it may be desirable that the feeding rate H should be as high as possible. From a practical point of view, there is a limit to how much each tooth is able to take from the work piece since the slice or splint taken by each tooth must be accommodated in the gullet G between different teeth 3 (see Fig. 4). For example, if the work piece becomes thicker, the speed H with which the work piece is fed must be reduced (assuming all other things are equal). As a rule of thumb, the volume of the gullet G cannot be filled to more than 70% for any material. During cutting of meat and fish, it may be so that the gullet G cannot be filled to more than 60%. The back-rake angle α for each slice of meat or fish that is cut is determined by the feed S (see Fig. 4) and the spacing T between different teeth.

For some saw blades used for cutting meat and fish, the area of the gullet G has been found to be the following:

| Spacing T | Area of Gullet |
|---|---|
| 6,4 mm | 11 mm² |
| 8,5 mm | 16 mm² |
| 12,7 mm | 34 mm² |
| 19 mm | 77 mm² |

The volume of a gullet G can be calculated as the product of the gullet area and the thickness of the saw blade.

The inventor of the present invention has found that it is advantageous if the teeth 3 are ground such that the angle of inclination α of the connecting surface 6 equals the back-rake angle α of the slices P that are cut. The inventor has found that a significant increase in the durability of the teeth 3 does not require a large reduction of the height of the teeth 3. Even quite small reductions of the teeth 3 can significantly improve the strength of the teeth 3 if the teeth 3 are ground to the correct angle of inclination for the connecting surface 6. The optimum angle of inclination for a particular application is considered to be the back-rake angle for that particular application. Of course, the largest possible back-rake angle for a specific application is dependent on such factors as the thickness of the work piece and is not a constant. Among other factors influencing the magnitude that is possible for the feed S, the number of teeth 3 interacting with the work piece in a given moment can be mentioned. It is of course desirable for economical reasons that the cutting operation should be fast. Consequently, the value for the feed S should not be lower than what is necessary. It should be understood that a thick work piece makes it necessary to use a small cutting depth S for each tooth while thinner work pieces can be cut with a larger cutting depth S for each tooth 3. Since the optimum angle is dependent on factors that are not constant, such as the size of the work piece, a theoretical calculation is considered less useful and the invention relies more on proven experience than theoretical calculation. Through experience, the inventor has found that the angle α should be 8° - 12°. In general, the angle of inclination should be made larger when the spacing T between the teeth becomes smaller. For a large spacing of 15 - 20 mm, the angle α may be 8° - 9° while an angle of 12° may be applicable to a spacing of about 7 mm. Of course, embodiments are also possible where a large angle of inclination, for example 11° -12°, is combined with a large spacing of 15 - 20 mm or where a smaller angle of inclination is combined with a relatively small spacing, for example 7 mm. Sometimes, the range for the angle of inclination may be somewhat more narrow and limited to 8° - 10°.

The importance of using an inclined connecting surface shall now be further explained with reference to Figs 6 - 9. If the edges 7 were ground down evenly, it would become difficult to make the leading end of the teeth 3 engage the work piece. Instead, the back of the teeth 3 would tend to engage the work piece 2. In Fig. 6, a saw blade is shown where the tips or edges 7 of the saw blade have been ground down evenly. When such a saw blade engages a work piece, the teeth will tend to engage the work piece with the back of the teeth as indicated in Fig. 7. The reason for this is that the saw blade 1 and the work piece 2 move relative to each other with a speed H such that the back of the teeth 3 will appear to be "higher" as schematically indicated in Fig. 7. Such a shape of the teeth 3 will therefore result in a poor cutting. To avoid this problem, the teeth 3 are ground to such a shape that the connecting surface 6 is sloping downwards from the leading face 4 to towards the trailing face 5 as illustrated in Fig. 2. Such a shape allows the leading face 4 of each tooth 5 to correctly engage the work piece 2 as indicated in Fig. 8. As explained above with reference to Fig. 4 and Fig. 5, the correct angle of inclination α for the connecting surface 6 should be the same as the back-rake angle for the application in which the saw blade operates. If the angle of inclination α of the connecting surface 6 is too small, the practical result will be that the back of the teeth will tend to engage the work piece in the same way as indicated in Fig. 7. Consequently, signs of wear on the rear part of the connecting surface 6 indicate that a larger angle of inclination is needed, not only to avoid wear but also to ensure that the teeth bite properly into the work piece.

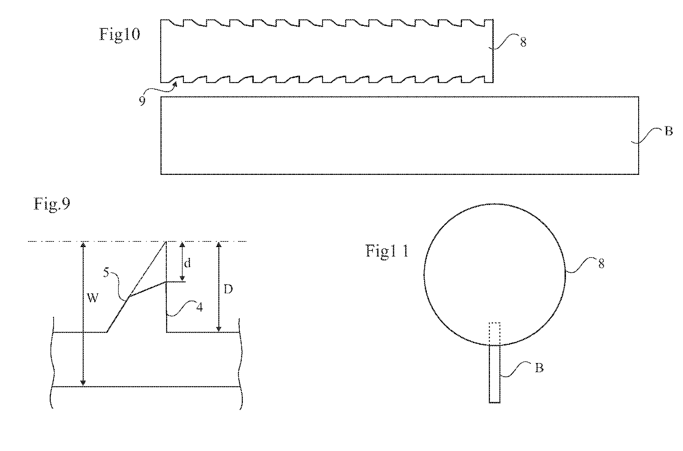

In comparison to a profile where there is no inclined connecting surface 6, the height of the teeth 3 should preferably not be reduced more than necessary since a reduction in the height of the teeth 3 also affects the size of the gullet G. It is also so that, during the operation where the teeth are shaped, it is preferable that as little material as possible should have to be removed. With reference to Fig. 9, a tooth is indicated by dotted lines where the leading face 4 actually meets the trailing face 5. The height of this hypothetical tooth is indicated as D. Compared to the height D, the teeth of the inventive saw blade have been reduced by the distance d since the grinding operation that shapes the connecting surface 6 also prevents the leading and trailing faces 4, 5 from meeting. The teeth 3 are thus "reduced" in height by the distance d. Of course, the teeth 3 are normally ground in one step and there would normally be no separate reduction grinding of a previously existing tooth. The "reduction" should thus be understood as the difference in height between a tooth on a saw blade according to the invention and the height D of a tooth where the leading face 4 actually meets the trailing face 5. In other words, the "reduction" d is the reduction in height necessary to produce the inclined connecting surface 6. In Fig. 9, the relative size of certain parts has been exaggerated for illustrative purposes. While, in a saw for sawing meat and fish, the total height of a tooth may be up to about 6.5 mm or possibly 7 mm (corresponding to D in Fig. 9), the "reduction" d will not be more than 0.5 mm in most practical embodiments. Actually, it is desirable that the "reduction" d be less than 0.5 mm. For example, the "reduction" d may be 0.2 - 0.4 mm. As an example of what may be a realistic embodiment, 0.2 mm can be mentioned. It is believed that the "reduction" d could even be less than 0.2 mm and the advantages of the invention can still be attained. Since the reduction d is very small, the length of the connecting surface will also be very small. For a large tooth with an overall height of 7 mm and a reduction d of 0,5 mm, the total length of the connecting surface 6 would not be more than 0,9 mm at the most and normally less than 0,9 mm. Actually, the length of the connecting surface 6 would normally not be more than 0,3mm - 0,7 mm. Even a shape corresponding to a reduction as small as 0.1 mm is believed to result in significant strengthening of the teeth 3 as long as the angle of inclination of the connecting surface 6 is the correct angle in the application where the saw is used. For such a shape, the length of the connecting surface 6 could be less than 0,2 mm.

It can be added that, in a saw for meat or fish, the total height D of a tooth may normally be in the range of 1,5 mm - 7 mm.

A method of making a saw blade 1 may comprise the following steps. A steel blade B is ground to form a plurality of cutting teeth 3 that are spaced from each other with a spacing of 4 mm - 20 mm. During grinding, the teeth 3 are given such a shape that each cutting tooth 3 has a leading face 4 and a trailing face 5. At least some of the cutting teeth 3 are ground to a shape where the leading face 4 is connected to the trailing face 5 by a connecting surface 6 that is inclined in relation to the leading face 4 and the trailing face 5. The connecting surface 6 is further sloping downwards from the leading face 4 to the trailing face 5 and thus forms an angle of inclination of 8° to 12° with an imaginary straight line that connects the edges 7 of different teeth 3 to each other. The cutting teeth 3 may optionally be subsequently hardened. The hardening operation is performed by heating the tips of the teeth to a temperature where the material in the teeth becomes austenitic and then quickly cooling the teeth 3. The heated teeth may be cooled in, for example, oil. The heating is preferably performed by induction heating or laser. Induction heating and heating by laser are suitable methods since these methods can achieve a rapid heating and the heating can be limited to the tips of the teeth. When the heating is limited to the tips, this has the result that the tips of the teeth can become hard while the toughness of the teeth is kept relatively unchanged in a large part of the teeth. In other words, it is possible to harden the teeth 3 in such a way that only a part of each tooth 3 becomes hardened.

A part of a possible manufacturing process is schematically indicated in Figs. 10 and 11. A grinding tool 8 has a profile 9 that is a mirror image of the intended profile for a saw blade 1. In Figs. 10 and 11, the grinding tool 8 is shown as a rotary tool 8. However, it should be understood that the grinding tool 8 could be a linearly movable tool. The grinding tool 8 grinds the shape of several teeth 3 simultaneously. The grinding process makes it possible to form the teeth 3 in a very accurate way that ensures that each tooth has exactly the desired shape. The grinding operation also allows several teeth 3 to be formed at the same time. A further advantage of the grinding operation is that only one forming step is required - both the teeth 3 and the sloping connecting surfaces 6 are formed in one step. However, it should be understood that embodiments of the invention are possible where the teeth 3 are formed first and the sloping (inclined) connecting surfaces in a subsequent step.

Preferably, each cutting tooth 3 is ground to the same shape.

A theoretical method of determining the proper angle of inclination α for the connecting surface 6 of the teeth 3 may be as follows. When a user of saw blades (for example a butcher shop) requests new saw blades, the manufacturer asks the user what kind of saws that are currently used, i.e. such information as for example the spacing T between adjacent teeth. For a given spacing T, a cutting depth S for each tooth 3 is determined. The largest possible cutting depth S is determined by the size of the gullet G. The cutting depth S for a tooth multiplied with the thickness of the work piece must not exceed the size of the gullet. If the thickness of the work piece is K and the area of the gullet is A, then it follows that SK ≤ A. In practice, experience has demonstrated that the gullet G can not be filled to more than (about) 70%. This corresponds to the formula SK ≤ 0.7 A. For a saw with a given spacing T and a known size of the gullet G, the cutting depth can then be calculated when the thickness of the work piece is known. However, practical experience has showed that such a theoretically calculated value may often become too small and it should be ensured that the chosen angle of inclination is in the range of 8° - 10°.

Based on the calculated cutting depth S, a saw similar to a currently used saw blade is manufactured but where the teeth are ground with an inclined connecting surface 6 between the leading face and the trailing face of the teeth and the angle of inclination is chosen such that tan α = S/T where S is the calculated cutting depth and T is the spacing between the teeth 3. The angle α will then be equal to the back-rake angle when the saw blade operates at its maximum capacity.

Naturally, the operating conditions for any given user need not be constant over time. For example, the size of the work pieces may vary over time. For this reason, wear and damage on the saw blades should be closely monitored. Also, the optimum shape for the teeth varies from one user to another depending on different operating conditions.

In practice, it can be expected that the user of the saw blade 1 or saw blades 1 will try to feed work pieces against the saw with the highest speed H possible. With a given saw moving at a given speed V and assuming a given work piece (e.g. an animal carcass), there is a practical limit for what the saw can manage and thus which feeding rate that can be attained. When the saw blade 1 no longer forms a straight line, the operator of the saw will know that the highest attainable feed rate has been reached. This feed rate is directly proportional to the feed S for the work piece. In principle, there is nothing that prevents the operator from choosing a lower feed rate. If this should be the case, a correspondingly smaller angle of inclination α can be used. However, it can be expected that the required angle of inclination α normally corresponds to the highest possible feed rate.

A saw blade according to the present invention and saw blades manufactured according to the inventive method will be more resistant to fatigue cracking and wear. Consequently, they will have a longer life.

While the invention has been described in terms of a saw blade and a method for making the saw blade, it should be understood that the invention may also be understood in terms of a use of such a saw blade for cutting meat or fish, e.g. animal carcasses. By using a saw blade according to the present invention for cutting meat or fish, one gains the advantage of a saw blade that is particularly well suited to cutting such objects and that will remain a sharp and effective cutting tool during long periods of use.

By using grinding to shape the teeth 3, it is possible to achieve a very high precision and to obtain the correct angle α on each tooth. In this way, it can be ensured that the connecting surface 6 has the correct angle for each application. This increases the useful lifetime for the saw blades.

The use of grinding and the precision in the grinding operation also makes it possible to give the same angle of inclination to each connecting surface 6. This means that the teeth 3 can be identical and each tooth can be optimised for the specific work pieces it will be used to cut. This also increases the useful service life for the saw blades.

## Claims

1. A saw blade (1) suitable for cutting meat and fish, the saw blade (1) having a plurality of cutting teeth (3) that are spaced from each other with a spacing of 4 mm - 20 mm and each cutting tooth (3) has a leading face (4) and a trailing face (5) and at least some of the cutting teeth (3) have been ground to a shape where the leading face (4) is connected to the trailing face (5) by a connecting surface (6) that is inclined in relation to the leading face (4) and the trailing face (5), the connecting surface (6) further sloping downwards from the leading face (4) to the trailing face (5) and thereby forming an angle of inclination of 8° to 12° with an imaginary straight line that connects the edges (7) of different teeth (3) to each other.

2. A saw blade (1) according to claim 1, wherein the saw blade (1) is a bandsaw blade.

3. A saw blade (1) according to claim 1, wherein the teeth (3) are hardened teeth (3).

4. A method of making a saw blade (1), the method comprising the steps of providing a steel blade (B) and grinding the steel blade (B) to form a plurality of cutting teeth (3) that are spaced from each other with a spacing of 4 mm - 20 mm and grinding the teeth (3) to such a shape that each cutting tooth (3) has a leading face (4) and a trailing face and at least some of the cutting teeth (3) are ground to a shape where the leading face (4) is connected to the trailing face (5) by a connecting surface (6) that is inclined in relation to the leading face (4) and the trailing face (5), the connecting surface (6) further sloping downwards from the leading face (4) to the trailing face (5) and thereby forming an angle of inclination (α) of 8° to 12° with an imaginary straight line that connects the edges (7) of different teeth (3) to each other and where the cutting teeth (3).

5. A method according to claim 4, wherein the teeth (3) hardened after the grinding operation.

6. A method according to claim 4, wherein each cutting tooth (3) is ground to the same shape.

7. Use of a saw blade according to any of claims 1- 3, wherein the saw blade is used to cut meat or fish.
